# EUROPEAN PATENT APPLICATION

(11) **EP 1 334 662 A1**
(43) Date of publication of application: **13.08.2003**
(21) Application number: 01976810.0
(22) Date of filing: 23.10.2001
(51) Int. Cl.: A23B 7/10, A23L 3/015

(54) **A METHOD OF MANUFACTURING FOOD UTILIZING DEEP SEA WATER LAYER**

(30) Priority: 23.10.2000 JP 2000322348
(71) Applicant: Kyoueisuisan Co., Ltd, Yawatahama-shi, Ehime 796-0001 (JP)
(72) Inventor: OMOTO, Shigeru, Yawatahama-shi, Ehime 796-0001 (JP)
(74) Representative: Harding, Charles Thomas
(86) International application number: JP0109271
(87) International publication number: WO02034060

(57) **Abstract**

The object of the present invention is to manufacture novel food products that are delicious and nutritious, by utilizing the characteristic of a deep sea layer, a low temperature and high pressure (environment). It comprises the following steps: a step of sealing food materials into a bag or container into the sea to allow it to sink into a deep sea water layer, 200 m or more below sea level; a step of throwing down the food product sealed in said bag or container; a step of keeping said bag or container at the aforementioned deep sea water layer for at least 30 minutes or more; and a step of lifting said bag or container on the sea.

## Description

### Technical Field

The present invention relates to a method for processing and manufacturing a food product utilizing a low temperature and high pressure environment, which is a characteristic of a deep sea water layer.

### Background Art

Conventionally, attempts have been made to manufacture cosmetic products and food products utilizing deep sea water which is rich in nutrients such as minerals.

However, every conventional food processing technique utilizing deep sea water were a method to first intake deep sea water from the deep sea water layer on the sea, and then to use the deep sea water either on land or on the ocean, for food processing. Thus, labor and costs to purposely intake deep sea water for food processing were necessary. Additionally, in the conventional method, it was not considered to make use of the characteristic of the deep sea water layer, which is the low temperature and high pressure.

On the other hand, a technique for processing food under low temperature and high pressure has been developed as a method for sterilizing enzyme or microorganism without damaging the flavor of food materials, or as a method for manufacturing food products by making use of gelling of protein or gelatinizing of starch utilizing the high pressure. However, as it required expensive equipment, the manufacturing cost was high, and moreover, complex operations were needed such as regulating sensitively the temperature variation at the time of pressurization and depressurization.

### Disclosure of the Invention

The present invention provides a method for manufacturing food product by a simple operation of throwing down food materials into the deep sea water layer where the deep sea water exists, and to utilize the purity and rich nourishment as well as the low temperature and high pressure which are the characteristics of the deep sea water.

The method for manufacturing food product according to the present invention, having as an object to solve the above mentioned problems, is a method for manufacturing a novel food product wherein the flavor is preserved close to food material and the loss of nutrients is small, by keeping the food material for a prescribed time at a deep sea water layer where the low temperature and high pressure environment prevails. Additionally, the present invention is characterized by keeping food materials for more than 30 minutes at a deep sea water layer 200 m or more below sea level, where a low temperature and high pressure environment prevails.

Furthermore, the present invention is characterized by comprising the following steps: a step of sealing food materials in a bag or container made of material that does not easily penetrate seawater when placed in a water pressure less than 200 m below sea level, but can penetrate seawater when placed in a high water pressure, 200 m or more below sea level; a step of throwing down the food products sealed in said bag or container into the sea to allow it to sink into a deep sea water layer 200 m or more below sea level; a step of keeping said bag or container at the aforementioned deep sea water layer for at least 30 minutes or more; and a step of lifting said bag or container on the sea.

Still further, the present invention is characterized by comprising the following steps: a step of sealing vegetables or fruits in a bag or container made of material that does not easily penetrate seawater when placed in a water pressure less than 200 m below sea level, but can penetrate seawater when placed in a high water pressure, 200 m or more below sea level; a step of throwing down the vegetables or fruits sealed in said bag or container into the sea to allow it to sink into a deep sea water layer 200 m or more below sea level; a step of keeping said bag or container at the aforementioned deep sea water layer for at least 30 minutes or more; and a step of lifting said bag or container on the sea.

Moreover, according to the present invention, the aforementioned bag or container is made of material prepared by placing one over another multiple woven or non-woven textiles in which interstices between adjacent filaments are narrow.

Additionally, the present invention is characterized by comprising the following steps: a step of sealing food materials in a bag made of material being impervious to seawater or in a flexible container; a step of throwing down the food products sealed in said bag or container into the sea to allow it to sink into a deep sea water layer 200 m or more below sea level; a step of keeping said bag or container at the aforementioned deep sea water layer for at least 30 minutes or more; and a step of lifting said bag or container on the sea.

Furthermore, the present invention is characterized by comprising the following steps: a step of wrapping up food materials with a net or the like, so that the food materials can be directly exposed to seawater, and throwing down into the sea to allow it to sink into a deep sea water layer 200 m or more below sea level; a step of keeping said food products at the aforementioned deep sea water layer for at least 30 minutes or more; a step of lifting said food products on the sea; and a step of sterilizing the aforementioned food products that had been lifted, by a known sterilizing methods such as the use of ozone, ultraviolet rays or drugs.

Still further, the present invention also comprises the following steps: a step of carrying said food materials to be thrown down into the sea by a marine vessel from land to where the food materials will be thrown down into the sea; a step of lifting aforementioned bag or container from the deep sea water layer on the sea with a windlass (draw gear) loaded on the marine vessel; and a step of carrying said food products lifted from the deep sea water layer to the land by the marine vessel.

### Best Mode of Carrying Out the Invention

According to the present invention, the manufacturing equipment loaded on the marine vessel is a simple equipment, wherein a string bag or other container is connected to the tow rope and a weight (plummet) is attached to the edge of said container or tow rope. In other words, during the manufacturing process according to the present invention, the edge of the tow rope of said equipment is fixed to the marine vessel or the like, the food materials are put in the string bag, other bag or container, thrown down to reach the deep sea water layer at an unprescribed depth, and after an unprescribed time, the tow rope is reeled up by driving a hydrostatic unit to collect the food materials.

In the present invention, the food materials to be kept in the sea, and the bag or container do not have to be connected all the time with the marine vessel and the like. The effectiveness of the operation, and the improvement in the safety could be achieved for example, by attaching a buoy or the like to the tow rope, cutting off the rope from said marine vessel, and putting a number of said equipment on the surface of the sea.

### Example 1

Example 1 of the present invention is a method for manufacturing pickles, which comprises the following steps (1) to (4).
(1) A step of sealing vegetables such as radish and the like in a bag or container made of material that does not easily penetrate seawater when placed in a water pressure less than 200 m below sea level, but can penetrate seawater when placed in a high water pressure, 200 m or more below sea level.
   In this step (1), the vegetables are put in a bag on the vessel, and the mouth of said bag is sealed. The bag used in this step is made of material prepared by placing one over another for example ten sheets of a known cloth (woven or non-woven textiles), conventionally used for filtration, and which interstices between adjacent filaments are kept narrow.
(2) A step of throwing down into the sea the vegetables sealed in said bag, and to allow them to sink into the deep sea water layer 200 m or more below sea level.
   In this step (2), a weight is attached to said bag on the vessel, and the bag is thrown down from the vessel into the sea to allow it to sink into the deep sea water layer 200 m or more below sea level. In this step (2), said bag reaches the deep sea water layer in about several minutes from the time when it is thrown down into the sea. During the several minutes from the time when said bag is thrown down in the sea until it reaches the deep sea water layer, seawater (comprising minute bacteria) rarely penetrates said bag.
(3) A step of keeping said bag at the aforementioned deep sea water layer for at least 30 minutes or more. In this step (3), the vegetables in said bag are exposed to a high water pressure (20 atm. or higher) provided by the deep sea water layer, and predetermined modifications such as gelling of protein or gelatinizing of starch and the like occur. Thus, the vegetables are transformed to pickles of good quality. Furthermore, in this step (3), even if a small amount of seawater (seawater comprising minute bacteria) has penetrated the bag during the passage of the above mentioned step (2) (several minutes), that is from the time the bag has been thrown down into the sea until it had reached the deep sea water layer, said minute bacteria in the seawater which have invaded, will be destroyed by being exposed to a high water pressure of the deep sea water layer. Additionally, in this step (3), due to the high pressure of the deep sea water layer (20 atm. or higher), "deep sea water free of minute bacteria and rich in valuable nutrients such as minerals" will penetrate the bag and thus the vegetables, valuable nutrients such as minerals and the like will accumulate in the vegetables and "pickles of high nutritional value, impregnated with deep sea water" will be produced.
(4) A step of lifting said bags on the sea.

After 30 minutes or more have passed in step (3), said bag is lifted on the sea by driving the draw gear with the hydrostatic unit of the vessel. It takes approximately several minutes to lift said bag from the deep sea water layer on the sea. There is almost no possibility that seawater in the sea (seawater comprising minute bacteria) would penetrate said bag during the several minutes. That is because: as above mentioned, said bag used in the present example is made to not easily penetrate seawater when placed under water pressure at 200 m or less below sea level; and the inside of said bag has the same pressure as the deep sea water layer, being a high pressure of 20 atm. or higher, because the deep sea water have penetrated said bag during the above step (3). Thus, during the step of lifting said bag, even though a small amount of deep sea water in the bag might escape outside (into a relatively shallow sea, wherein the water pressure is low), it is almost impossible that the seawater outside the bag will penetrate said bag.

In other words, generally speaking, minute bacteria exist in seawater where the depth is relatively shallow, however, in the present example, seawater comprising such minute bacteria will not penetrate said bag. Therefore, there is no possibility that seawater comprising the aforementioned minute bacteria would penetrate said pickles. As a result, "hygienic pickles free from minute bacteria and safe to human body" can be manufactured in the present example.

### Example 2

Example 2 of the present invention is a method for manufacturing, which comprises the following steps (1) to (4).
(1) A step of sealing vegetables in a bag (or a flexible container) made of material impervious to seawater. In this step (1), for example, the vegetables are put in a bag made of materials impervious to seawater, such as vinyl, wrapping film and the like.
(2) A step of throwing down the vegetables sealed in said bag into the sea, to allow them to sink into a deep sea water layer 200 m or more below sea level.
(3) A step of keeping said bag at the aforementioned deep sea water layer for at least 30 minutes or more.
(4) A step of lifting said bag on the sea.

According to the present Example (2), by exposing said vegetables to a high pressure of 20 atm. or higher in the deep sea water layer, predetermined modification such as gelling protein, gelatinizing starch or the like occurs, and said vegetables are modified to a novel food product of good quality. Further more, in the present Example 2, as said vegetables are sealed in a bag made of material impervious to seawater, there is no possibility that the minute bacteria comprised in seawater would invade said vegetables, in other words, the pickles. Thus, "hygienic and novel food products, free of bacteria and safe to human body" can be manufactured.

As stated above, according to the present Example 2, food materials are put in a bag or container made of material that does not penetrate seawater, the low temperature and high pressure of deep sea water are utilized, modifications such as gelling protein, gelatinizing starch or the like are made to occur to food materials, thereby novel food products are processed. Thus, for example, according to the present Example 2, ingredients for tomato puree, pumpkin paste or carrot paste without heating process (as they are not heated, there are no loss of nutrients due to heating, and have high nutritional value) can be produced. Additionally, according to the present Example 2, by putting raw egg into a deep sea water layer where a low temperature and high pressure environment prevails, a novel egg-based product can be manufactured by gelatinizing the egg while keeping the color and clarity of the raw egg.

### Example 3

Example 3 of the present invention is a method for manufacturing, which comprises the following steps (1) to (4).
(1) A step of binding vegetables with a cord or wrapping with a net, in a condition that the vegetables may be freely exposed to seawater, of throwing them down into the sea to allow it to sink into a deep sea water layer 200 m or more below sea level.
(2) A step of keeping said vegetables at the aforementioned deep sea water layer for at least 30 minutes or more.
(3) A step of lifting said vegetables (pickles) on the sea.
(4) A step of sterilizing said lifted vegetables by a known method such as the use of ozone, ultraviolet rays or drugs.

In the present Example 3, as mentioned above, the vegetables are thrown down into the sea freely exposed to seawater, moved to a deep sea water layer and modified to pickles under its high pressure. Then, the vegetables are lifted and sterilized by a known method. Thus " hygienic pickles safe to human body" are manufactured.

### Validation Experiment by the present inventor

The present inventor conducted a validation experiment at the beginning of August 2000, in the waters off Tanegashima Island, Kagoshima Prefecture, where its depth is 2000 m. The present inventor attached a net such as fishnet to a wire rope; put vegetables and fruits such as radishes, carrots, pumpkins, eggplants, cucumbers, kiwis and the like in the net as samples; kept them for 30 minutes at a deep sea water layer 800 m below sea level; lifted the net using the wire rope by driving the hydrostatic unit; and collected the net. In result, all of the samples were collected, none of them being damaged by the water pressure. Due to the low temperature and high pressure and the osmotic pressure of the deep sea water layer, the samples were collected in a state very similar to overnight cured pickles. By tasting the samples, all of them were good, and particularly the pumpkins were excellent. The samples showed a clear luster in addition to the natural color of the food material. The reason is not clear, but it is inferred that the gelatinizing of starch has occurred in relation to the osmotic pressure of the deep sea water and the low temperature and water pressure of the deep sea. The samples thus collected were landed, stored in a household refrigerator for a week, but the luster, clarity, taste and the savor remained the same.

Each example of the present invention mentioned above has been described, but the present invention is not limited to these examples and various modifications are possible. For example, in each of the example mentioned above, vegetables and fruits were used as samples, but it is also possible to develop a novel food product from meats or fishery products, by utilizing the low temperature, high pressure and osmotic pressure of the deep sea water, by promoting the gelling of protein that can not be obtained from a heating process.

Furthermore, according to the present invention, it is possible to regulate the pressure to the food material (pressurization and depressurization) by adjusting the depth where the food materials are kept, by moving up and down the tow rope. The combination of the pressurization and depressurization can add various aspects to the food material.

Additionally, according to the present invention, the osmotic pressure of deep sea water is eliminated by putting the temporarily treated food materials in a flexible bag made of synthetic resin, a laminate bag made of aluminum foil and synthetic resin, film, or the like, and various types of processing by utilizing the low temperature and high pressure are possible. Moreover, according to the present invention, by changing the container, it is possible to manufacture food products utilizing the high boiling point in a high pressure environment.

Further, according to the present invention, it is possible to synthesize not only food products, but also materials that are difficult or impossible to synthesize under normal pressure. A synthesis of a new material can be expected and as it can be realized at a low cost, it can be utilized in a broad scope such as the field of pharmaceuticals, cosmetic products, fine chemicals and the like.

### Industrial Applicability

According to the present invention, by keeping food material for a predetermined time in the deep sea water layer where a low temperature and high pressure environment prevails, a novel food product wherein the flavor is preserved close to raw food material and the loss of nutrients is small, can be manufactured. In other words, according to the present invention, novel food products wherein the flavor is preserved close to raw food material and the loss of nutrients is small, can be manufactured by putting a food material in a bag made of material impervious to seawater such as vinyl and the like or in a flexible container; followed by keeping said bag or container at the deep sea water layer longer than a predetermined time; then adding the effect of the low temperature and high pressure which the deep sea water prevails to the food material; and then letting modification occur to the food materials such as gelling of protein, gelatinizing of starch or the like. That is, according to the present invention, for example, ingredients for tomato puree, pumpkin paste or carrot paste, without heating process (as they are not heated, there are "no loss of nutrients due to heating" and the nutrient value is high.), can be manufactured. Furthermore, according to the present invention, by putting raw eggs, for example, in the deep sea water layer where the low temperature and high pressure prevails, a novel egg-based product can be manufactured by gelling the egg, keeping the color and clarity of the raw egg.

Additionally, according to the present invention, delicious and high nutrient "food products impregnated with deep sea water" such as pickles can be manufactured at a low cost by utilizing the purity and rich nourishment, and the low temperature and high pressure which are both the characteristics of the deep sea water. The manufacturing comprises the throwing down the food material from above the sea, keeping the food material at the deep sea water layer where the deep seawater prevails, and then letting the deep sea water penetrate said food material. Moreover, in the present invention, particularly when the food material is sealed "in a bag or container made of material that does not easily penetrate seawater when placed in a water pressure less than 200 m below sea level, but can penetrate seawater when placed in a high water pressure, 200 m or more below sea level", and put at the deep sea water layer, bacteria in the sea hardly invade the bag or container during the several minutes until the bag reaches the deep sea water layer in the ocean. Even if some bacteria have invaded during this step, said bacteria would be destroyed being exposed to a high pressure provided by the deep sea water layer. Additionally, there is almost no possibility that the bacteria undersea would invade said bag or container during the several minutes to lift said bag or container from the deep sea water layer on the sea. (This is because, since said bag or container has the same high pressure as that of the deep sea water layer, even though a small amount of deep sea water might escape outside from said bag or container, it is impossible that seawater outside the bag will penetrate said bag or container.) Thus, according to the present invention, when the food materials are sealed "in a bag or container made of material that does not easily penetrate seawater when placed in a water pressure less than 200 m below sea level, but can penetrate seawater when placed in a high water pressure, 200 m or more below sea level" and kept at the deep sea water layer, "minute bacteria existing undersea less than 200 m below sea level" are prevented to invade the food materials, and "hygienic food products such as pickles and the like, free of small bacteria and safe to human body" can be manufactured.

Especially, in the present invention, as the aforementioned food materials and the food products manufactured are transported by vessels that are inexpensive, and as the pressurization to the food materials is done without using expensive equipment for pressurization but by utilizing the deep sea water layer which exist in the nature, food products such as pickles and the like can be manufactured at an extremely low cost.

The present invention relates to a method for manufacturing, utilizing marine vessels and the like on the ocean, therefore, there is almost no possibility of contamination due to soil fungi. Thus, manufacturing under a clean environment where dusts and bacteria merely exist, that is on the ocean, is possible. Additionally, in the present invention, the marine vessels used are means of transportation that can carry in large quantity, and are energy efficient compared to railroad or truck transport. Therefore, an efficient system at a low cost can be built, where it is possible to manufacture food products by transporting at a low cost, and the manufacturing of the product and the distribution are integrated.

As for the deep sea water, even though there are some difference according to the sea area, the temperature of a deep sea water layer is low and constant all year round according to its depth (around 10.degree. C. 200 m below sea level, and around 3.degree. C. 2000m below sea level), and as there is no possibility that the water will freeze, according to the present invention, a stable treatment under low temperature and high pressure is possible by keeping food materials at a random depth for a random time.

The vessel and the like used in the present invention may vary according to the products to be manufactured, but no special construction is necessary beside a tow rope and a hydrostatic unit for reeling the rope. The manufacturing is possible by remodeling and converting conventional fishing vessel or freight vessel, and therefore, it is easy to put the present invention into practice without any additional expensive fees.

By the way, with the conventional fishing vessels, it is possible to lift a load of approximately 10 t from undersea with a draw gear by driving the hydrostatic unit. Thus, in the present invention, by utilizing a draw gear by driving a hydrostatic unit which is loaded on a conventional fishing vessel, it is possible, for example, to attach a weight of 5 t to a bag, put 2 to 3 t of food materials such as vegetables, meats or the like in the bag, throw down the bag into a deep sea water layer, and then to lift the bag from there after a predetermined time.

Additionally, in the present invention, as a marine vessel is used, it is possible to move place according to the circumstances of place of production of the food materials or to the place of consumption, and there is a benefit of high mobility.

As described above, the method for manufacturing food products according to the present invention is a method wherein food materials are thrown down directly into the deep sea water layer from the vessel and the like on the ocean, and the food materials are matured by utilizing a low temperature and high pressure that the deep sea water prevails, thus it is possible to manufacture highly nutritious pickles and other novel food products at an extremely low cost compared to conventional methods.

## Claims

1. A method for manufacturing a novel food product wherein the flavor of the food product is preserved close to raw food material and the loss of nutrients is small, which comprises a step of "keeping a food material for a predetermined time at a deep sea water layer 200 m or more below sea level, where a low temperature and high pressure environment prevails".

2. A method for manufacturing a food product which comprises a step of keeping a food material for more than 30 minutes at a deep sea water layer 200 m or more below sea level, where a low temperature and high pressure environment prevails.

3. A method for manufacturing a food product comprising the following steps: a step of sealing a food material in a bag or container made of material that does not easily penetrate seawater when placed in a water pressure less than 200 m below sea level, but can penetrate seawater when placed in a high water pressure, 200 m or more below sea level; a step of throwing down the food product sealed in said bag or container into the sea to allow it to sink into a deep sea water layer 200 m or more below sea level; a step of keeping said bag or container at the aforementioned deep sea water layer for at least 30 minutes or more; and a step of lifting said bag or container on the sea.

4. A method for manufacturing pickles of a vegetable and a fruit comprising the following steps: a step of sealing the vegetables or fruits in a bag or container made of material that does not easily penetrate seawater when placed in a water pressure less than 200 m below sea level, but can penetrate seawater when placed in a high water pressure, 200 m or more below sea level; a step of throwing down the vegetable or fruit sealed in said bag or container into the sea to allow it to sink into a deep sea water layer 200 m or more below sea level; a step of keeping said bag or container at the aforementioned deep sea water layer for at least 30 minutes or more; and a step of lifting said bag or container on the sea.

5. A method for manufacturing a food product according to claim 3 or 4, wherein said bag or container is made of material prepared by placing one over another multiple woven or non-woven textiles in which interstices between adjacent filaments are narrow.

6. A method for manufacturing a food product comprising the following steps: a step of sealing a food material in a bag, made of material being impervious to seawater or in a flexible container; a step of throwing down the food product sealed in said bag or container into the sea to allow it to sink into a deep sea water layer 200 m or more below sea level; a step of keeping said bag or container at the aforementioned deep sea water layer for at least 30 minutes or more; and a step of lifting said bag or container on the sea.

7. A method for manufacturing a food product comprising the following steps: a step of wrapping up a food material with a net or the like, so that the food material can be directly exposed to seawater, and throwing down into the sea to allow it to sink into a deep sea water layer 200 m or more below sea level; a step of keeping said food product at the aforementioned deep sea water layer for at least 30 minutes or more; a step of lifting said food product on the sea; and a step of sterilizing said food product lifted by a known sterilizing method such as the use of ozone, ultraviolet rays, drugs or the like.

8. A method for manufacturing a food product according to any one of claims 2 to 6, further comprising the following steps: a step of carrying said food material to be thrown down into the sea by a marine vessel from land to a spot on the sea from where the food materials will be thrown down into the sea; a step of lifting said bag or container in the aforementioned deep sea water layer on the sea with a windlass loaded on a marine vessel; and a step of carrying said food product lifted from the aforementioned deep sea water layer to the land by the marine vessel.
